Europäisches Patentamt

European Patent Office

Office européen des brevets

(11) Publication number : **0 488 974 A2**

# EUROPEAN PATENT APPLICATION

(21) Application number : 91850237.8

(22) Date of filing : 27.09.91

(51) Int. Cl.⁵ : **H04N 1/00, H04N 1/04**

(30) Priority : **29.11.90 SE 9003779**
**11.04.91 SE 9101088**

(43) Date of publication of application :
**03.06.92 Bulletin 92/23**

(84) Designated Contracting States :
**AT BE CH DE DK ES FR GB GR IT LI LU NL SE**

(71) Applicant : **Scherman, Knut Christian Achates**
**Villa Svalboet, Pl 359 B**
**S-510 41 Sjömarken (SE)**

(72) Inventor : **Scherman, Knut Christian Achates**
**Villa Svalboet, Pl 359 B**
**S-510 41 Sjömarken (SE)**

(74) Representative : **Örtenblad, Bertil Tore**
**Noréns Patentbyra AB Box 27034**
**S-102 51 Stockholm (SE)**

(54) **A method for imaging an object and a system for carrying out the method.**

(57)   A method of imaging an object (1), such as a picture (1), for reproduction of the object in image form of an image (1'), wherein the object is scanned by means of a scanner such as to produce an image in the form of signals, such as video signals, which are transmitted to a control unit (3) in the form of a computer, and in which method an image of the object is displayed on a display screen (6) by means of the control unit, and in which reproduction is effected in the form of a vectorized image.

The method is mainly characterized in that the steps of scanning the object to produce an image thereof, vectorizing, storing and displaying stored images on the screen (6) are carried out automatically in a continuous sequence, wherein each new image is stored over or after the preceding image at a predetermined position by means of the control unit (3), and in that the sequence is interrupted, when an image of desired quality is obtained, and in that the image last stored is used for reproduction purposes.

The invention also relates to a system for carrying out the method.

Fig. 1

The present invention relates to a method for imagizing an object, such as a picture, for reproduction of the object in image form, wherein the object is scanned and an image in signal form, such as in video signal form, is produced and transmitted to a control unit in the form of a computer, where an image of the object is displayed on a display screen by means of the control unit and in which method reproduction of the object is effected in the form of a vectorized image. The invention also relates to system for carrying out the method.

Methods of substantially this kind are previously known, among other things from graphic procedures which include engraving processes. The known methods, however, are extremely time-consuming. For example, the reproduction produced by the scan is not precise, and the quality of the reproduction is greatly dependent on the result of the scan. it can be mentioned by way of example in this respect that when scanning/vectorizing a picture, a line of uneven thickness may be vectorized either as a single line, as a double line or as no line at all, at one and the same time. The manner in which the line is represented depends on the resolution used in relation to the local thickness of the line. It will therefore be obvious that the result of the scan may vary within wide limits.

According to known methods, scanning and storing of the result are effected in the form of dots. A programme/process change is then made for vectorizing purposes, followed by vectorization and display.

The graphics, or images, obtained are naturally often poor. The images can be edited with the aid of CAD-systems, although the work involved is time-consuming and may take several hours to complete. Alternatively, a new scan can be made and the result of the scan can be studied after awhile, subsequent to carrying out a number of working steps.

The present invention provides a solution to the aforesaid problem. When practicing the invention, it is possible to obtain the best possible image of the scanned object in vectorized form in a very short period of time.

Thus, the invention relates to a method of imagizing an object, such as a picture, for reproduction of the object in the form of an image, comprising the steps of scanning the object, such as to produce an image in signal form, such as in the form of video signals; transmitting said signals to a control unit in the form of a computer where an image of the object is displayed on a display screen by means of the control unit, and reproducing the object in the form of a vectorized image.

The method is particularly characterized in that the steps of scanning of the object such as to produce an image thereof, vectorizing, storage and display of the stored image on the screen take place automatically in a continuous sequence, wherein each new image is stored over or after the preceding image at a predetermined position by means of the control unit, the sequence is interrupted, preferably when an image of desired quality is achieved; and in that the image which was stored last is used for reproduction purposes.

The invention also relates to a system for imaging an object, such as a picture, said apparatus comprising means for scanning the object such as to produce an image of the object in signal form, such as in the form of video signals, and transmitting the image signals to a control unit in the form of a computer, wherein said system also includes means which function to present an image of the object on the display screen in response to a signal from the control unit, wherein reproduction is intended to take place in the form of a vectorized image.

The apparatus is particularly characterized in that the steps of scanning the object, to produce an image thereof, vectorizing and storing of the image, and presentation of the stored image are intended to take place automatically in a continuous, unbroken sequence, wherein each new image is intended to be stored over or after a preceding image at a predetermined position by means of the control unit; and in that the system also includes for interrupting said sequence, preferably when an image of desired quality is achieved, wherein the image last stored is intended to be used for reproduction purposes.

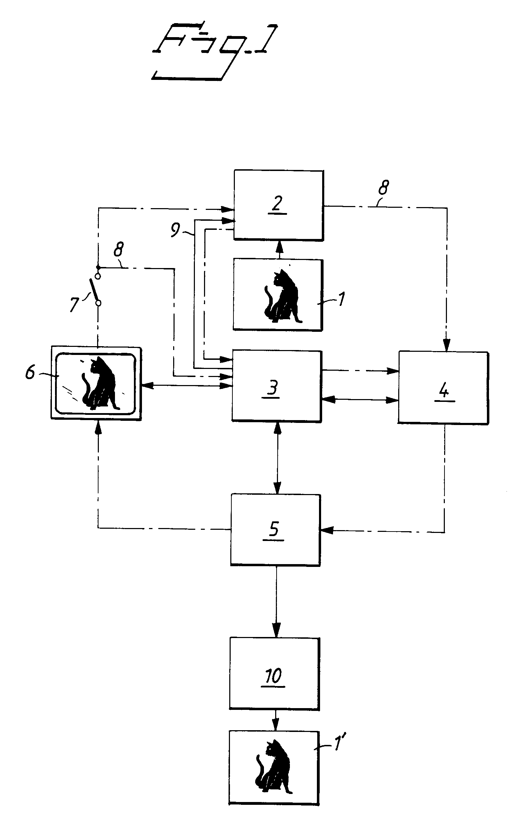

The invention will now be described in more detail with reference to exemplifying embodiments thereof and with reference to the accompanying drawing, the single Figure of which is a block schematic of a primary exemplifying embodiment of an inventive system.

Shown in the drawing is an object 1, in this case a picture 1, which is scanned such as to produce a picture image 1'. The reference numeral 2 in the drawing identifies devices, such as a video camera 2, which scan the object and produce an image in signal form, such as in the form of video signals, and for transmitting the image signals to a control unit 3, in the form of a computer 3. The system also includes means 4, which are preferably embodied in the control unit 3, for vectorizing the image transferred from the scanning and image-producing means.

The reference numeral 5 identifies devices which function to store the thus vectorized image and which are also preferably incorporated in the control unit 3 and, while the reference numeral 6 identifies devices, preferably in the form of a display screen 6, for displaying stored vectorized images.

The system is constructed in a manner such that the steps of scanning the object in order to imagize the same, vectorizing and storing the image, and displaying the stored and vectorized images takes place automatically in a continuous, unbroken sequence, under the control of the control unit 3. In this respect, each new image is stored over or after the preceding image at a predetermined position. This enables the image, in the form of a predetermined file, to be stored over images that have been earlier stored in the form of the same file.

This continuous sequence can be interrupted by means of means 7, which are preferably incorporated in the control unit 3. The sequence is interrupted preferably when an image of desired quality is displayed on the display screen 6. In this regard, the image/file last stored is intended to be used for reproduction purposes.

This sequence in which these steps are carried out is indicated in the drawing by chain-line arrows 8 drawn between the different steps 2, 4, 5, 6. Coaction of the various units/steps with the control unit 3 is marked either with full-line, single headed arrows or with double-headed arrows 9.

The inventive system also includes means for varying the resolution of the scan, said variation being effective mechanically, optically and/or electronically and corresponding variations in image quality being studied on the display screen. The number of dots per unit of surface area constitutes a measurement of the resolution.

The resolution can be varied in several ways. According to one preferred embodiment, in which the scan is effected with the aid of a video camera, means of a known kind (not shown) are used to vary the distance from the camera to the object concerned within the focusing range of the camera and/or for zooming the camera onto the object, thereby varying the resolution of the scan. The scanner, however, need not have the form of a video camera.

According to another embodiment, means (not shown) are provided for varying the resolution of the scan electronically, wherein variation can be achieved by selecting predetermined resolution alternatives and/or varying the resolution continuously within predetermined limits. In this regard, the step of varying the scan is included in the aforesaid step sequence, for instance between the step of displaying a stored image and the step of carrying out a new scan.

According to another preferred embodiment, the system includes means (not shown) which function to vary the resolution only in the horizontal direction, therewith enabling the appearance of the image in the vertical direction to be influenced substantially, and/or to vary the resolution solely in the vertical direction, therewith enabling the appearance of the image to be substantially influenced in the horizontal direction.

According to one embodiment, which is preferred in some cases, the selection of resolution is carried out in accordance with a logarithmic scale.

The reference numeral 10 identifies means which function to handle and use the stored image, such as engraving machines, printing machines, etc.

The manner in which the inventive system and the inventive method operate will be understood in all essentials from the aforegoing. Thus, the steps of scanning the object, vectorizing the image obtained from the scan, storing the image in the form of a given file, and displaying the stored image are all effected automatically in a continuous sequence, wherein a continuous variation of the scan quickly provides an image of the best possible quality, whereafter the sequence is interrupted and the image/file last stored is used for reproduction purposes.

It will be evident from the aforegoing that the invention also provides essential technical and economic advantages.

Although the invention has been described above with reference to exemplifying embodiments thereof, it will be understood that other embodiments and minor modifications to the described embodiments are conceivable within the scope of the inventive concept.

The reproduction of an object in image form, the term imagizing as used here shall be given a wide interpretation and the image produced by having a varying degree of exatness with regard to the imaged object.

For example, variations in the result obtained with the scan can be effected by varying the prerequisites for vectorization, which prerequisites may contain the maximum and minimum distances between points that are to be joined together, wherein the system includes means, preferably incorporated in the control unit 3, for carrying out such variations. This variation of the scanning result is intended primarily as a complementary step, although in certain cases it may constitute an alternative.

Scanning of an object to produce an image of the object where the scanning conditions are changed in said sequence can be effected as a combination of scanning and processing in the control unit/computer in a manner such that an image which constitutes the result of a scan is altered by processing in the control unit and a corresponding change in resolution and/or zooming, wherein images which constitute the result of such processing in the control unit are vectorized, stored, etc. in said sequence. Combinations of a new scan and such processing in the control unit are also conceivable. The word scanning shall thus, in this regard, be given a wide interpretation and is considered to include the aforesaid processing/changing of an image by means of the control unit/computer 3.

The aforedescribed scanning variant is represented in the drawing by chain-line arrows 8 between a point after displaying an image and the control unit between the scanner and the control unit and between the control unit and vectorization.

The invention is therefore not restricted to the aforedescribed embodiments thereof, since modifications can be made within the scope of the following Claims.

## Claims

1. A method for imaging an object, such as a picture, comprising steps of scanning the object, producing an image of the object in the form of signals, such as video signals, transmitting the image signals to a control unit in the form of a computer, displaying an image of the object on a display screen through the medium of the control unit, and effecting reproduction in the form of a vectorized image, **characterized** in that the steps of scanning the object to produce an image thereof, vectorizing, storing and displaying the stored image on the screen (6) are effected automatically in a continuous sequence, wherein each new image is stored over or after a preceding image at a predetermined position by means of the control unit (3); and in that said sequence is interrupted, preferably when an image of desired quality is obtained, and in that the image last stored is used for reproduction purposes.

2. A method according to Claim 1, **characterized** in that the resolution of the scan is varied mechanically, optically and/or electronically, and corresponding variations of the quality of said image are studied on the display screen (6).

3. A method according to Claim 1 or 2, in which there is preferably used a scanner in the form of a video camera (2), **characterized** in that scanning is varied by adjusting the distance of the camera from the object (1) within the focusing range of the scanner (2) and/or by zooming.

4. A method according to Claim 1, 2 or 3, **characterized** in that scanning is varied electronically by selecting predetermined resolution alternatives or by varying the resolution continuously within predetermined limits, wherein the step of varying said scan is included in said sequence, for example between the steps of displaying a stored image and carrying out a new scan.

5. A method according to Claim 1, 2, 3 or 4, **characterized** in that storage of a vectorized image in the form of a predetermined data file is effected in one the same manner in said sequence, wherein a new file replaces an earlier stored file.

6. A method according to Claim 1, 2, 3, 4 or 5, **characterized** in that vectorizing requirements are varied with the intention of varying the result of the object detecting process.

7. A method according to Claim 1, 2, 3, 4, 5 or 6, **characterized** in that the scan is varied, for example with regard to resolution and/or zooming, by processing a scanner-produced image in the control unit.

8. A method according to Claim 1, 2, 3, 4, 5, 6 or 7, **characterized** in that the resolution is varied only in the horizontal direction, thereby enabling the appearance of the image to be influenced substantially in the vertical direction, and/or the resolution is varied only in the vertical direction, thereby enabling the appearance of the image in the vertical direction to be substantially influenced.

9. A method according to Claim 1, 2, 3, 4, 5, 6, 7 or 8, **characterized** in that the selection of resolution is effected in accordance with a logarithmic scale.

10. A system for imaging an object, such as a picture, comprising means for scanning and the object and producing an image in the form of signals, such as video signals, and transmitting the image signals to a control unit in the form of a computer, and further comprising means which function to display an image of the object on the display screen in response to a signal from the control unit, and wherein reproduction is effected in the form of a vectorized image, **characterized** in that the steps of scanning the object to produce an image thereof, vectorizing and storing the image, and displaying stored images are intended to be carried out automatically in a continuous, unbroken sequence, wherein each new image is intended to be stored over or after a preceding image by the control unit (3) at predetermined position; and in that means (7) are provided for interrupting said sequence, preferably when an image of desired quality is obtained, wherein the image last stored is intended to be used for reproduction purposes.

11. A system according to Claim 10, **characterized** in that the system includes means for varying the resolution of the scan, wherein said variation can be effected mechanically, optically and/or electronically; and in that corresponding variations of image quality are intended to be studied on the display screen (6).

12. A system according to Claim 10 or 11, in which the scanner used to scan said object is preferably a video camera, **characterized** by means for varying the distance between the object and the camera (2) within the existing scanner focusing range and/or for zooming, thereby varying the scan.

13. System according to Claim 10, 11 or 12, **charac-**

**terized** by means for varying the scan electronically, wherein said variation can be effected by selection of predetermined resolution alternatives and/or by continuous variation of the resolution within predetermined limits.

14. System according to Claim 10, 11, 12, or 13, **characterized** by a device (5) for continuous storage of vectorized images in the form of predetermined data files in one and the same manner in said sequence, wherein new files are intended to replace earlier files.

15. System according to Claim 10, 11, 12, 13 or 14, **characterized** by means for varying the requirements for vectorization with the intention of varying the result of the scan.

16. System according to Claim 10, 11, 12, 13, 14 or 15, **characterized** in that the scan is intended to be varied with respect to resolution and/or zooming, by processing in the control unit (3) a scanner-produced image.

17. System according to Claim 10, 11, 12, 13, 14, 15 or 16, **characterized** by means for varying the resolution solely in a horizontal direction, thereby enabling the appearance of the image in a vertical direction to be substantially influenced, and/or for varying the resolution solely in a vertical direction, thereby enabling the appearance of the image in the horizontal direction to be substantially influenced.

18. System according to Claim 10, 11, 12, 13, 14, 15, 16 or 17, **characterized** in that selection of resolution is intended to be effected in accordance with a logarithmic scale.

*Fig.1*